**Europäisches Patentamt**

(19) **European Patent Office**

**Office européen des brevets**

(11) Publication number: **0 098 675**
**B1**

(12) **EUROPEAN PATENT SPECIFICATION**

(45) Date of publication of patent specification: **20.08.86**

(51) Int. Cl.⁴: **H 01 M 2/16**

(21) Application number: **83300892.3**

(22) Date of filing: **21.02.83**

(54) **Method of fabricating improved separator.**

(30) Priority: **17.06.82 US 389331**

(43) Date of publication of application:
**18.01.84 Bulletin 84/03**

(45) Publication of the grant of the patent:
**20.08.86 Bulletin 86/34**

(84) Designated Contracting States:
**DE FR GB IT**

(56) References cited:
**FR-A-2 360 180**

(73) Proprietor: **YARDNEY ELECTRIC CORPORATION**
**82 Mechanic Street**
**Pawcatuck Connecticut (US)**

(72) Inventor: **Chireau, Roland F.**
**57 Washington Street**
**New London, CT 06320 (US)**

(74) Representative: **Wilson, Joseph Martin et al**
**WITHERS & ROGERS 4 Dyer's Buildings Holborn**
**London EC1N 2JT (GB)**

Courier Press, Leamington Spa, England.

## Description

### Background of the invention
#### Field of the invention

The present invention generally relates to separators for alkaline batteries and more particularly to improved silverized and titanized cellulosic separators.

#### Prior art

U.S. Patent No. 4,091,185, issued May 23, 1978, is directed to the preparation of separators for electrochemical batteries, such as silver-zinc batteries. In accordance with the disclosure therein, a silverized cellulosic separator is introduced into a silver-zinc battery; a titanium-containing compound is then added to the cell either by painting it onto the silverized cellulosic material or by adding it to the electrolyte or to the zinc electrode. It can also be added to a separate sheet placed between the separator and the electrode, which sheet functions as a negative inter-separator. The titanium is then complexed with silver in the separator by subjecting the cell to a series of charge-discharge cycles. Although this procedure results in a satisfactory separator which is capable of inhibiting the migration of silver ions from the silver electrode through the electrolyte to the zinc electrode, thus inhibiting self-discharge and eventual cell circulating, the cell is not immediately fully protected against such migration since the titanium-silver complex is only generated as the cell is used.

It would therefore be desirable to be able to provide an improved simplified method of silverizing and titanizing a cellulosic separator outside of a cell in order to form a titanium-silver complex therein before introducing the separator into the electrochemical cell. It would also be desirable if such method utilized readily available reagents to provide rapid and highly efficient results.

### Summary of the invention

The improved method of the present invention satisfies the foregoing needs. The invention is substantially as set forth in the Abstract above. It comprises a method wherein a sheet of cellulosic material to be used as a separator in an electrochemical cell is contacted in a treating zone outside of an electrochemical cell simultaneously with a plurality of reagents. One of the reagents contains a silverizing material and another reagent contains a titanizing material. The contact is maintained at a temperature and for a time sufficient to substantially introduce into the cellulosic material an effective concentration of each of silver and titanium to form an effective concentration of a titanium-silver complex in the sheet. Thereafter, the sheet is separated from contact with the reagents, then washed and dried.

The finished separator can then be introduced into an alkaline electrolyte-containing battery having electrodes of silver and cadmium or nickel and cadmium or nickel and iron or nickel and zinc or silver and zinc or mercuric oxide and zinc or mercuric oxide and cadmium. In each instance, the separator effectively prevents migration of dissolved ions from one electrode through the electrolyte to the other electrode, therefore, inhibiting self-discharging and eventual short circuiting of the battery. In the case of silver and zinc electrodes, silver ions are inhibited from migrating to the zinc electrode. Moreover, the separator resists chemical degradation including oxidative attack.

Since the method can be carried out rapidly and effectively in a separate bath outside the electrochemical cell, a fully operational, fully protective separator which includes the formed silver-titanium complex is introducible into the cell for maximum initial effectiveness, in contrast to silver-titanium complex-containing separators wherein the complex is generated in the electrochemical cell during operation of the cell. Further features of the present invention are set forth in the following description.

### Detailed description

In accordance with the method of the present invention, a cellulosic separator for use in electrochemical cells is selectively impregnated with two different reagents simultaneously to introduce silver and titanium into the cellulose and to form the same into a complex in the cellulose, to improve the oxidation resistance of the cellulose and the operating characteristics of the electrochemical cell. The cellulosic sheet which is impregnated is a flexible sheet or plurality of sheets having cellulosic surface components. For example, the cellulosic material can include regenerated cellulose produced by the xanthate process, by the viscose process, by denitration of cellulose nitrate, by the cuprammonium process or by deacetylation of cellulose acetate. It is preferred that the cellulosic sheet material consist of semi-permeable regenerated cellulose produced by the viscose process. Material such as Cellophane® 150-PD (available from DuPont de Nemours & Co.) is preferred or a similar product sold under the designation PUDO-193. However, unplasticized cellulose film, clear cellulose casing and fibrous cellulose casing material are also desirable.

The impregnation is carried out in any suitable treating zone outside of an electrochemical cell at concentrations, times and temperatures sufficient to result in a total concentration of silver and titanium in the cellulose of about 0.05 to about 15 weight percent. However, the complex preferably is in a concentration of about 2—11 weight percent. The silver is introduced into the cellulose by any suitable technique. The impregnating solution containing the silver preferably is in the form of an aqueous solution of silver nitrate wherein the concentration of silver nitrate in the water is about 1 percent by weight and wherein the solution also contains about 1 percent by weight of sodium acetate or the like. The cellulose is immersed in a tank, beaker or the like containing the aqueous silver nitrate-sodium acetate-containing water solution any suitable length of time, but preferably about 1—15 minutes while the solution is maintained at an elevated temperature of, for example, about 70—80°C.

It will be understood that, for example, potassium acetate can be substituted for the sodium acetate and that any water soluble silver salt can be used to supply the silver to the cellulose. For example, soluble silver compounds such as the following can be used: silver-acetate, silver propionate and silver fluoride. In most instances such soluble salts are utilized in an aqueous solution with either sodium acetate or potassium acetate or a mixture thereof and the solution temperature is between about 50°C. and about 100°C.

The impregnating solution in the treating zone also contains a titanium compound which comprises titanium-containing material selected from the group consisting of organic titanate, titanium dioxide, alkali metal titanate and alkaline earth metal titanate. Preferably the titanium-containing material comprises potassium titanate, sodium titanate, magnesium titanate or titanium dioxide.

The treating bath also contains an aqueous solution of alkali metal hydroxide, for example, potassium hydroxide, lithium hydroxide or sodium hydroxide in a suitable concentration, that is, containing preferably 30—35 weight percent of the hydroxide in the water. The titanium-containing material is dissolved in the aqueous hydroxide, preferably in a saturated concentration. The weight ratio of the hydroxide plus titanium-containing material to the silver salt plus acetate is preferably about 5:1.

After the cellulosic material has been impregnated in the treating bath to the desired extent, so that a titanium-silver complex is formed and is attached to the cellulosic material in a concentration of approximately 2—11 percent by weight, depending upon the residence, time and other factors, the cellulosic material is then withdrawn from the treating bath, washed with water, preferably deionized water, and then dried and is ready for use. The titanium complex attaches to the cellulosic chain to provide the cellulosic material with improved oxidation resistance so as to inhibit the degradation of the material when using it as a separator in an electrochemical cell such as a silver-zinc battery. The cellulosic separator material is also utilizable with other types of alkaline batteries incorporating silver and cadmium electrodes, nickel and cadmium electrodes, nickel and iron electrodes, mercuric oxide and zinc electrodes and mercuric oxide and cadmium electrodes.

The purpose of the separator is to physically isolate the two electrodes of the battery or cell from each other in order to prevent their contacting or contaminating each other. Contamination arises when salts of a metal of one of the electrodes such as silver salts are formed because of the solubility of the electrode in the alkaline electrolyte, which is usually highly concentrated potassium hydroxide. In the case of silver cells, silver salts are formed. Such salts can migrate through the electrolyte to the other electrode, causing the cell or battery to self-discharge and eventually short circuit. The separator retards this migration through the electrolyte through the separator to both electrodes.

Oxidation and chemical degradation of the cellulosic separator normally occurs because the effects of the concentrated alkaline electrolytes and the oxidizing effect of the dissolved metal salt, silver salts in the case of silver electrode-containing cells. In silver electrode-containing cells, metallic silver and silver oxide are disposed in the separator. There is considerable evidence to substantiate the conclusion that the degradation of the separator occurs in the form of a redox reaction involving an oxidative attack on the cellulosic separator by the soluble silver salt while the silver deposition results in a complementary reduction of the silver to its lower valence states. The following specific example further illustrates certain features of the present invention.

Example

In a first series (series A), material known under the Registered Trade Mark Cellophane (PUDO-193—available from E.I. du Pont de Nemours & Co.) was soaked in 100°F (38°C) water for approximately one minute and then transferred wet to a treating bath outside of an electrochemical cell. The bath contained an aqueous solution having a 30 percent by weight concentration of potassium titanate. This aqueous solution had previously been combined with a 1 percent solution of silver nitrate saturated with sodium acetate, the silver nitrate solution being in a weight ratio to the potassium hydroxide solution of approximately 1:5. The bath was maintained at about 70°C, and the Cellophane was immersed in the bath for a period of 5 minutes. Thereafter, the Cellophane was withdrawn from the bath, washed free of treating solution by deionized water and dried.

Parallel runs in series A were made utilizing in one case a residence time of one minute and in a second case a residence time of 15 minutes.

A second series (series B) was run in the manner described above, utilizing residence times of 1, 5 and 15 minutes and incorporating the procedure described above except that the concentration of potassium hydroxide in aqueous solution was 5 weight percent.

In a third series (series C), utilizing resience times of 1,5 and 15 minutes, the bath contained an aqueous solution of potassium hydroxide wherein the hydroxide was in a concentration of 15 weight percent.

Each silver-titanium complex impregnated Cellophane sample prepared in accordance with the above was then treated by incorporating it into a test cell which consisted of four positive (silver) electrodes, each 4.76 cm wide×7.62 cm high and 0.58 mm thick and five negative (zinc) electrodes, each measuring 4.76 cm wide×7.62 cm high and 1.06 mm thick. The Cellophane was disposed between the electrodes and the resulting cell pack was placed in a plastic cell case which was then sealed with a cover terminal assembly after the cell case was filled with a 45 weight percent solution of aqueous potassium hydroxide. The cell was allowed to soak for 72 hours and then subjected to two formation cycles consisting of two consecutive charge-discharge cycles (charge at 0.6 amperes to 2.05 volts cut-off and discharge at 4 amperes to 1.00 volt cut-off. The capacity (AH) obtained from the cell on the second cycle discharge was noted. The cell was then placed on a continuous cycling regime (charge at 0.6 amperes to 2.05 volts and discharge at 4 amperes to 1.0 volts). The electrical resistance and the physical characteristics including dry and wet thickness and appearance were also noted for each impregnated Cellophane® and are set forth in the following table.

## TABLE

| Series | Treatment residence time (minutes) | KOH (wt-%) | Ti-Ag complex (wt-%) | Electrical resistance ($M\Omega/in^2$) | Thickness | |
|---|---|---|---|---|---|---|
| | | | | | Dry (mils) | Wet (mils) |
| A | 1 | 30 | 3.6 | 20 | 1.2 | 2.4 |
| | 5 | 30 | 4.4 | 20 | 1.2 | 2.4 |
| | 15 | 30 | 10.6 | 21 | 1.2 | 2.4 |
| B | 1 | 5 | 2.0 | 18 | 1.2 | 2.8 |
| | 5 | 5 | 3.0 | 17 | 1.2 | 2.8 |
| | 15 | 5 | 4.3 | 19 | 1.2 | 2.8 |
| C | 1 | 15 | 2.2 | 22 | 1.1 | 2.7 |
| | 5 | 15 | 4.8 | 21 | 1.1 | 2.8 |
| | 15 | 15 | 8.8 | 20 | 1.1 | 2.8 |

From the information set forth in the Table above, it is apparent that the electrical resistance of the Cellophane impregnated with the titanium-silver complex varies between about 109 and 142 milliohms per square centimetre. The wet thickness of each Cellophane sheet was about 60—70 μm and the dry thickness was about 28—30.5 μm. All of the impregnated Cellophane sheets performed satisfactorily as separators in the test cell. However, it was preferred to utilize a residence time of about 5 minutes along with a concentration of about 30 weight percent of potassium hydroxide in the treating bath. Under those conditions the titanium-silver complex was in a concentration of about 4.4 weight percent in the Cellophane and exhibited an electrical resistance of about 20 milliohms. The performance of each of the silver-titanium complex-impregnated Cellophane sheets as a separator was substantially improved over conventional unimpregnated Cellophane sheets as a separator was substantially improved over conventional unimpregnated and silver impregnated Cellophane separators.

Additional tests were run following the procedure set forth but substituting magnesium titanate, titanium dioxide and various organic titanates for the potassium titanate. Further tests were run substituting sodium hydroxide for the potassium hydroxide and tests were also run substituting various fibrous regenerated cellulosic films and other cellulosic films for the Cellophane. Finally, tests were run utilizing silver acetate and/or silver fluoride in place of silver nitrate and potassium acetate in place of sodium acetate in the treating solution. All the tests provided results comparable to those set forth above.

The above Examples clearly illustrates that a suitable silver-titanium-containing complex can be formed in a single step in a cellulosic sheet outside of an electrochemical cell to cause the sheet to have improved electrical, electrochemical and physical properties as a separator when subsequently used in an electrochemical cell. Thus, the separator has improved resistance to physical deterioration and shorting out, among other properties.

The method of formation involves the use of a single treating solution for a suitable residence time and temperature to achieve the desired result of in situ formation of the silver-titanium complex in the cellulose. Further features of the invention are as set forth in the foregoing.

## Claims

1. A method of making a titanium and silver complex-impregnated regenerated cellulose separator for electrochemical cells wherein the method comprises treating a sheet of regenerated cellulose with a reagent for a time and at a temperature sufficient to simultaneously introduce silver and titanium into the cellulose from an aqueous solution in a treating zone outside the electrochemical cell and wherein the silver and titanium form a complex to improve the oxidation resistance of the cellulose.

2. A method according to Claim 1 wherein impregnation is carried out at a temperature between about 70°C and 80°C.

3. A method according to claim 1 or 2, wherein the treating zone includes an aqueous solution of alkali metal hydroxide and a titanium-containing material selected from organic titanate, titanium dioxide, alkali metal titanate and alkaline earth metal titanate.

4. A method according to claim 3 wherein the titanium-containing material comprises potassium titanate and wherein the hydroxide comprises potassium hydroxide saturated with the potassium titanate.

5. A method according to claim 4 wherein the regenerated cellulose is first soaked in warm water and then, while wet, is transferred to the treating zone and wherein the potassium hydroxide is present in a concentration of about 30 percent by weight of the aqueous solution.

6. A method according to any of the preceding claims wherein one of the reagents is an aqueous solution of a water soluble silver salt.

7. A method according to claim 6 wherein the silver salt is silver nitrate.

8. A method according to claim 7 wherein the silver nitrate is present in the aqueous solution in a concentration of about 1 percent by weight, wherein the solution also contains an alkali metal acetate in a saturated concentration, and wherein the combined weight ratio of the alkali metal hydroxide and the titanium-containing material to the silver nitrate and alkali metal acetate is about 5:1.

9. A method according to any of the preceding claims 3 to 8 wherein the titanium-containing material comprises potassium titanate, wherein the hydroxide contains potassium hydroxide in a 30 percent by weight concentration in aqueous solution and wherein the potassium titanate is in a saturated concentration.

10. A method according to any of the preceding claims wherein the treating zone is maintained at a temperature of about 70°C. and the cellulose is treated in the treating zone with the reagents for about 5 minutes and thereafter removed from the treating zone and washed free of reagents.

## Patentansprüche

1. Verfahren zur Herstellung eines Titan und Silber komplex-imprägnierten regenerierten Zellulose Separators für elektrochemische Zellen, umfassend die Behandlung einer Platte aus regenerierter Zellulose mit einem Reagenz für eine ausreichende Zeit und bei einer ausreichenden Temperatur, um gleichzeitig Silber und Titan in die Zellulose aus einer wäßrigen Lösung in einer Behandlungszone außerhalb der elektrochemischen Zelle einzuführen, wobei das Silber und das Titan einen Komplex zur Verbesserung der Oxidations-Widerstandsfähigkeit der Zellulose bilden.

2. Verfahren nach Anspruch 1, dadurch gekennzeichnet, daß die Imprägnierung bei einer Temperatur zwischen ca. 70°C und 80°C ausgeführt wird.

3. Verfahren nach Anspruch 1 oder 2, dadurch gekennzeichnet, daß die Behandlungszone eine wäßrige Lösung von Alkalimetall-hydroxid und einem Titan-enthaltendem Material beinhaltet, das aus organischem Titanat, Titan-dioxid, Alkalimetall-titanat und Erdalkalimetall-titanat ausgewählt ist.

4. Verfahren nach Anspruch 3, dadurch gekennzeichnet, daß das Titan-enthaltende Material Kalium-titanat umfaßt und daß das Hydroxid Kaliumhydroxid, das mit Kalium-titanat gesättigt ist, umfaßt.

5. Verfahren nach Anspruch 4, dadurch gekennzeichnet, daß die regenerierte Zellulose zuerst in warmem Wasser eingeweicht wird und dann, in naßem Zustand, in die Behandlungszone überführt wird, und daß das Kalium-hydroxid in einer Konzentration von ca. 30 Gew.% der wäßrigen Lösung enthalten ist.

6. Verfahren nach irgendeinem der vorhergehenden Ansprüche, dadurch gekennzeichnet, daß eines der Reagenzien eine wäßrige Lösung eines wasserlöslichen Silbersalzes ist.

7. Verfahren nach Anspruch 6, dadurch gekennzeichnet, daß das Silbersalz Silbernitrat ist.

8. Verfahren nach Anspruch 7, dadurch gekennzeichnet, daß der Silbernitrat in der wäßrigen Lösung in einer Konzentration von ca. 1 Gew.% enthalten ist, wobei die Lösung auch ein Alkalimetall-acetat in einer gesättigten Konzentration enthält, und wobei das kombinierte Gewichtsverhältnis von Alkalimetall-hydroxid und Titan-enthaltendem Material zu dem Silbernitrat und dem Alkalimetall-acetat ca. 5:1 ist.

9. Verfahren nach irgendeinem der vorhergehenden Ansprüche 3 bis 8, dadurch gekennzeichnet, daß das Titan-enthaltende Material Kalium-titanat umfaßt, wobei das Hydroxid Kalium-hydroxid in 30-gewichtsprozentiger Konzentration in wäßriger Lösung enthält und wobei das Kalium-titanat in einer gesättigten Konzentraiton vorliegt.

10. Verfahren nach irgendeinem der vohergehenden Ansprüche, dadurch gekennzeichnet, daß die Behandlungszone bei einer Temperatur von ca. 70°C aufrechterhalten wird und daß die Zellulose in der Behandlungszone mit Reagenzien ca. 5 Minuten lang behandelt wird und danach aus der Bahandlungszone entfernt und von das Reagenzien freigewaschen wird.

**Revendications**

1. Procédé pour fabriquer un séparateur en cellulose régénérée, imprégnée par un complexe de titane et d'argent, pour des éléments électrochimiques, ce procédé consistant à traiter une feuille de cellulose régénérée avec un réactif pendant une durée et à une température, qui sont suffisantes pour introduire simultanément de l'argent et du titane dans la cellulose à partir d'une solution aqueuse dans une zone de traitement située à l'extérieur de l'élément électrochimique l'argent et le titane formant un complexe permettant d'améliorer la résistance de la cellulose à l'oxydation.

2. Procédé selon la revendication 1, selon lequel on effectue l'imprégnation à une température comprise entre 70°C et 80°C.

3. Procédé selon la revendication 1 ou 2, selon lequel la zone de traitement comporte une solution aqueuse d'un hydroxyde d'un métal alcalin et d'un matériau contenant du titane et choisi parmi le titanate organique, le bioxyde de titane, un titanate d'un métal alcalin et un titanate d'un métal alcalino-terreux.

4. Procédé selon la revendication 3, selon lequel le matériau contenant le titane contient du titanate de potassium et selon lequel l'hydroxyde contient de l'hydroxyde de potassium saturé avec le titanate de potassium.

5. Procédé selon la revendication 4, selon lequel on immerge tout d'abord la cellulose régénérée dans le l'eau chaude et ensuite, à l'étant humide, ou la transfère jusqu'à la zone de traitement, et selon lequel l'hydroxyde de potassium est présent en une concentration d'environ 30 pour cent en poids de la solution aqueuse.

6. Procédé selon l'une quelconque des revendications précédentes, selon lequel l'un des réactifs est une solution aqueuse d'un sel d'argent soluble à l'eau.

7. Procédé selon la revendication 6, selon lequel le sel d'argent est du nitrate d'argent.

8. Procédé selon la revendication 7, selon lequel le nitrate d'argent est présent dans la solution aqueuse en une concentration égale à environ un pour cent en poids, et selon lequel la solution contient également un acétate d'un métal alcalin en une concentration correspondant à l'état saturé, et selon lequel le rapport combiné du poids de l'hydroxyde du métal alcalin et du matériau contenant le titane au poids du nitrate d'argent et de l'acétate du métal alcalin est égal à environ 5:1.

9. Procédé selon l'une quelconque des revendications 3 à 8, selon lequel le matériau contenant du titane contient du titanate de potassium, l'hydroxyde contient de l'hydroxyde de potassium en une concentration de 30 pour cent en poids en solution aqueuse et selon lequel le titanate de potassium est présent en une concentration correspondant à l'état saturé.

10. Procédé selon l'une quelconque des revendications précédentes, selon lequel la zone de traitement est maintenue à une température d'environ 70°C et la cellulose est traitée dans la zone de traitement avec les réactifs pendant environ 5 minutes et est ensuite éliminée de la zone de traitement et lavée de manière à être exempte de tout réactif.